Europäisches Patentamt

European Patent Office

Office européen des brevets

(19)

(11) EP 0 967 513 A1

(12) **DEMANDE DE BREVET EUROPEEN**

(43) Date de publication:
**29.12.1999 Bulletin 1999/52**

(51) Int Cl.$^6$: **G02F 1/35**

(21) Numéro de dépôt: **99401566.7**

(22) Date de dépôt: **24.06.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **26.06.1998 FR 9808367**

(71) Demandeur: **Delegation Generale Pour L'Armement**
**00457 Armées (FR)**

(72) Inventeurs:
• **Bourdon, Pierre**
**92320 Chatillon (FR)**
• **Jourdrier, Valérie**
**92100 Boulogne Billancourt (FR)**
• **Hache, François**
**94800 Villejuif (FR)**

(54) **Procédé et dispositif d'attenuation selective d'un rayonnement**

(57)     La présente invention concerne notamment le domaine des dispositifs ou systèmes dont le fonctionnement optique est modifié par changement des propriétés optiques du milieu les constituant et destinés notamment à la commande de l'intensité. Elle a plus particulièrement pour objet un dispositif d'atténuation de l'intensité d'un rayonnement comportant des particules en suspension dans un fluide, caractérisé en ce que les particules sont sphériques et en ce que le fluide est constitué par un mélange d'au moins deux liquides polaires et miscibles entre eux et dont l'indice de réfraction est inférieur à celui des particules sphériques pour l'un d'entre eux et supérieure à l'indice de réfraction des dites particules pour l'autre.

FIGURE UNIQUE

EP 0 967 513 A1

# EP 0 967 513 A1

## Description

La présente invention concerne notamment le domaine des dispositifs ou systèmes dont le fonctionnement optique est modifié par changement des propriétés optiques du milieu les constituant et destinés notamment à la commande de l'intensité. Elle a plus particulièrement pour objet un dispositif anti-éblouissement utilisable par exemple pour protéger un capteur optronique contre l'agression d'un rayonnement intense, comme celui émis par un laser impulsionnel.

Parmi tous les dispositifs anti-éblouissement utilisés, on peut en citer trois types

Le premier type de dispositif utilise des suspensions de particules de carbone pouvant se présenter sous la forme d'encre de chine fortement diluée dans un liquide. Ce type de dispositif transmet parfaitement la lumière ambiante mais ses propriétés optiques se modifient lorsqu'il est soumis à un rayonnement de très forte intensité, tel celui émis par un laser à impulsions, cette modification tendant à diminuer la transmission. L'intensité du rayonnement à la sortie dudit dispositif est donc inférieure à celle de l'entrée.

Ce type de dispositif donne de bons résultats en matière de protection contre des longueurs d'onde allant du visible au proche infrarouge, mais sa mise en oeuvre pose de nombreux problème tel celui de maintenir les particules de carbone en suspension.

Le deuxième type de dispositif concerne les filtres de Christiansen constitués par des petits morceaux de verre baignant dans un liquide dont l'indice de réfraction est choisi égal à celui du verre mais qui varie sous l'influence d'un rayonnement de forte intensité. Ainsi, ce dispositif est transparent au rayonnement de faible et moyenne intensité et devient diffusant lorsqu'un rayonnement de forte intensité le traverse.

L'intensité du rayonnement à la sortie dudit dispositif est donc inférieure à celle de l'entrée.

Le troisième type concerne les filtres colloïdaux cristallins il s'agit de particules en suspension dans un liquide et dont la particularité est de s'agencer sous Corme de matrice avec une structure du type cristalline.

Le liquide est choisi de telle manière que son indice de réfraction soit égal à celui des particules mais varie sous l'influence d'un rayonnement de forte intensité.

Ainsi, ce dispositif est transparent au rayonnement de faible et moyenne intensité et devient diffractant lorsqu'un rayonnement de forte intensité le traverse.

Les filtres de Christiansen et les filtres colloïdaux présentent un inconvénient majeur, en l'occurrence, ils sont spectralement sélectifs. En d'autres termes ces filtres n'ont lesdites propriétés précitées que pour une longueur d'onde ou pour un domaine restreint de longueurs d'onde. Ainsi ce type de filtre est par exemple inadapté pour protéger un dispositif optronique contre le rayonnement émis par un système laser accordable en longueur d'onde et impulsionnel.

On connaît par ailleurs, l'article de Guha et Al. intitulé « Laser-induced optical effects in a liquid suspension » où il est décrit un dispositif d'atténuation de l'intensité d'un rayonnement comportant des particules en suspension dans un fluide constitué par un mélange de CS2 (36,7%) et d'éthanol (63,3%) dont l'indice de réfraction est inférieur à celui des particules sphériques pour l'un d'entre eux et supérieure à l'indice de réfraction des dites particules pour l'autre.

Cependant l'expérience montre que les particules ne restent pas en suspension et s'aggrègent par gravité.

Le but de l'invention est de résoudre cet inconvénient en proposant un dispositif apte à atténuer un rayonnement incident, et ce quelle que soit la longueur d'onde de ce rayonnement et ne présentant pas les inconvénients au dispositif selon Guha.

La solution apportée est un dispositif d'atténuation de l'intensité d'un rayonnement comportant des particules sphériques en suspension dans un mélange d'au moins deux liquides miscibles entre eux, dont l'indice de réfraction est inférieur à celui des particules sphériques pour l'un d'entre eux et supérieur à l'indice de réfraction des dites particules pour l'autre, caractérisé en ce que le mélange est constitué d'au moins deux liquides fortement polaires et tel que le moment dipolaire moyen du mélange soit supérieur à 1,5Debye.

Selon une autre caractéristique, le dispositif comporte deux liquides miscibles l'un dans l'autre.

Selon une caractéristique additionnelle permettant une atténuation sélective de l'intensité du rayonnement incident, le mélange comporte un dosage de chacun des liquides tel que l'indice de réfraction du mélange est égal à celui des particules sphériques.

Selon une autre caractéristique, les particules sphériques sont en silice et/ou ont préférablement un diamètre de l'ordre du micromètre.

Selon une caractéristique particulière permettant notamment d'améliorer l'atténuation dans le cas où le rayonnement est de type impulsionnel, le mélange de liquide est visqueux, sa viscosité dynamique étant supérieure à 10 centipoise.

Selon une autre caractéristique, le dispositif comporte des billes de silice baignant dans un mélange de glycérol et d'éthylène glycol.

L'invention a auusi pour cojet un procédé d'atténuation sélective de l'intensité d'un rayonnement caractérisé en ce qu'il consiste à placer sur la trajectoire de ce rayonnement un milieu comportant des particules sphériques d'indice de réfraction rp dispersées dans un mélange d'au moins deux liquides dont l'un comporte un indice de réfraction r1 inférieur à celui des dites particules sphériques et l'autre un indice de réfraction supérieur à celui des particules sphériques, la concentration de chacun des liquides étant telle que l'indice de réfraction résultant, du mélange de liquide, est égal à celui rp des particules sphériques.

L'invention peut notamment être appliquée à des dispositifs optroniques comme par exemple une caméra ou un autodirecteur pour missile.

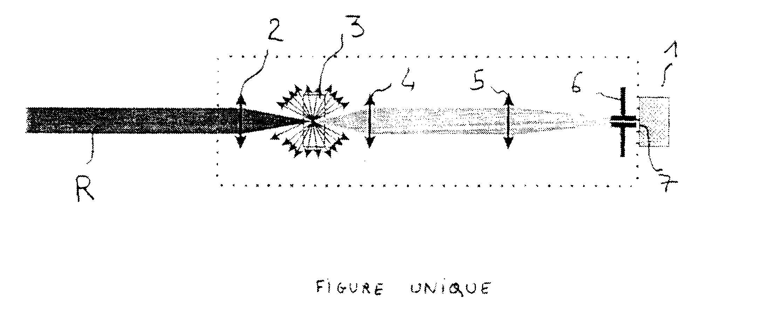

D'autres avantages et caractéristiques apparaîtront dans la description de modes particuliers de réalisation de l'invention au regard de la figure annexée qui montre un schéma de l'invention appliquée à un dispositif optronique.

La figure unique présente l'invention dans une application particulière à savoir celle d'un dispositif optronique.

Ce dispositif comporte une caméra CCD 1 transmettant une image vidéo à des moyens de traitement aptes à déterminer la position d'une cible dans cette image.

Lorsqu'un rayonnement de forte intensité, tel celui émis par un laser accordable en fréquence et impulsionnel, est dirigé sur les éléments photosensibles de cette caméra, ces derniers se détériorent et la caméra devient inutilisable.

Pour éviter ces détériorations l'optique d'imagerie de la caméra est adapté. Cette optique d'imagerie comporte une lentille convergente 2, un dispositif 3 d'atténuation sélective de l'intensité du rayonnement incident, et un objectif 4,5, 6 apte à former l'image optique du champs de vision filmé sur les éléments sensibles 7 de la caméra.

Le dispositif 3, situé dans un plan focal secondaire de l'optique d'imagerie, comporte une enveloppe réalisée en matériau optiquement transparent aux fréquences d'émission d'un laser impulsionnel accordable en fréquence, enveloppe contenant des billes de silice baignant dans un mélange de deux liquides, à savoir du glycérol (62,4%) et de l'éthylène glycol (37,6%).

Ces deux liquides sont fortement polaires puisque le moment dipolaire du glycérol est de 2,56 Debye tandis que celui de l'éthylène glycol est de 2,28 Debye. Ainsi, le moment dipolaire moyen du mélange est de 2,455 Debye

Les billes ont été fabriquées par la méthode de Stöber et ont toutes sensiblement le même diamètre, soit environ 0,11 micromètres. L'indice de réfraction de ces billes est de 1,458.

Le glycérol et l'éthylène glycol sont deux liquides fortement polaires, parfaitement miscibles et très visqueux et leurs indices de réfraction sont situés en dessous de celui des billes de silice pour l'un et au-dessus pour l'autre comme le montre le tableau ci-après.

|  | Indice de réfraction | Viscosité (poise) |
|---|---|---|
| Glycérol | 1,4746 | 16 |
| Ethylène-glycol | 1,4318 | 0,2 |

Les proportions du mélange de liquide sont telles que l'indice de réfraction résultant est égal à celui des billes de silice.

Ainsi, le mélange comporte 61,2% de glycérol et 38,8% d'éthylène-glycol, l'indice de réfraction moyen du liquide étant alors égal à la combinaison linéaire suivante :

$$R = 0,612*1,4746+0,388*1,4318 = 1,458.$$

Un volume similaire de billes et de mélange ainsi formé est mélangé afin d'obtenir une dispersion relativement homogène des billes dans le mélange. L'ensemble est ensuite introduit dans l'enveloppe afin de constituer le dispositif atténuateur de l'intensité du rayonnement R.

Ce dispositif permet d'atténuer sélectivement le rayonnement incident R. En effet, lorsque l'intensité de ce rayonnement est faible ou moyen, ce qui est le cas de la lumière ambiante, le milieu constitué par les billes et le liquide apparaît comme un milieu optiquement homogène. Le rayonnement R n'est alors pratiquement pas atténué car environ 90% voir plus du rayonnement incident le traverse.

Lorsque le milieu reçoit un rayonnement de forte intensité, l'interface entre les billes et le liquide est modifiée par le rayonnement incident, par modification de l'orientation des molécules du milieu autour des billes et par rupture des liaisons hydrogène liant ces molécules à la surface des billes. Lorsque l'intensité est très forte, un claquage diélectrique d'une partie des billes ou un endommagement de leur surface peut survenir. Le milieu, sous l'action de l'un ou de l'un et l'autre de ces effets devient diffusant ce qui réduit le niveau d'énergie atteignant les éléments sensibles de la caméra. Le milieu devient donc hétérogène par désadaptation d'indice.

Lorsque le milieu ne reçoit plus de rayonnement de forte intensite, il redevient. après un certain temps que l'on peut qualifier de relaxation, transparent à un rayonnement de faible ou de moyenne intensité car les billes se désactivent ou sortent de la zone active par collision.

Plus le mélange de liquide est visqueux et plus le temps de relaxation est important. A titre d'exemple, ce temps est de l'ordre de la miliseconde pour un mélange peu visqueux et peut atteindre plusieurs secondes pour un mélange visqueux.

Ainsi dans le cas d'un rayonnement émis par un laser impulsionnel et de l'utilisation d'un mélange visqueux, le milieu n'a pas le temps de redevenir homogène entre deux impulsions de rayonnement et l'atténuation est permanente pendant toute la durée du train d'impulsions de rayonnement.

Enfin, on peut noter qu'un dispositif apte à agiter périodiquement le milieu peut lui être associé lorsque l'utilisation de l'invention est statique et réalisée sur une longue durée. De plus la polarité des liquides stabilise la dispersion des billes dans le mélange.

De nombreuses modifications peuvent être réalisées sans sortir du cadre de l'invention. Il en est ainsi notamment de la taille des billes et du matériau qui les constitue, de la concentration des billes dans le mélange de liquides et du nombre et de la nature des liquides employés donc de leur polarité, de leur viscosité et de leur indice de réfraction.

**Revendications**

1. Dispositif d'atténuation de l'intensité d'un rayonnement comportant des particules sphériques en suspension dans un mélange d'au moins deux liquides miscibles entre eux, dont l'indice de réfraction est inférieur à celui des particules sphériques pour l'un d'entre eux et supérieur à l'indice de réfraction des dites particules pour l'autre, caractérisé en ce que le mélange est constitué d'au moins deux liquides fortement polaires et tel que le moment dipolaire moyen du mélange soit supérieur à 1,5Debye.

2. Dispositif selon la revendication 1, caractérisé en ce que le mélange comporte un dosage de chacun des liquides tel que l'indice de réfraction résultant est égal à celui des particules sphériques.

3. Dispositif selon l'une quelconque des revendications 1 et 2, caractérisé en ce que les particules sphériques sont en silice.

4. Dispositif selon l'une quelconque des revendications 1 à 3, caractérisé en ce que le diamètre des particules sphériques est de l'ordre du micromètre.

5. Dispositif selon l'une quelconque des revendications 1 à 4, caractérisé en ce que la viscosité dynamique du mélange de liquide à la température ambiante est supérieure à 10 centipoiseuille.

6. Dispositif selon l'une quelconque des revendications 1 à 5, caractérisé en ce que le dispositif comporte des billes de silice baignant dans un mélange de glycérol et d'éthylène glycol.

FIGURE UNIQUE

# EP 0 967 513 A1

**Office européen des brevets**

## RAPPORT DE RECHERCHE EUROPEENNE

Numéro de la demande

EP 99 40 1566

### DOCUMENTS CONSIDERES COMME PERTINENTS

| Catégorie | Citation du document avec indication, en cas de besoin, des parties pertinentes | Revendication concernee | CLASSEMENT DE LA DEMANDE (Int.Cl.6) |
|---|---|---|---|
| D,A | GUHA S ET AL: "Laser-induced optical effects in a liquid suspension" OPTICS COMMUNICATIONS, 15 MARCH 1987, NETHERLANDS, vol. 61, no. 6, pages 425-431, XP002096782 ISSN 0030-4018 * page 425, ligne 5 - ligne 6 * | 1-3 | G02F1/35 |
| A | US 5 317 454 A (SHARP EDWARD J ET AL) 31 mai 1994 (1994-05-31) * abrégé * | 1,4 | |
| A | US 4 890 075 A (POHLMANN JUERGEN L W ET AL) 26 décembre 1989 (1989-12-26) * abrégé * | 1 | |
| A | DATABASE INSPEC 'Online! INSTITUTE OF ELECTRICAL ENGINEERS, STEVENAGE, GB Inspec No. 5856224, JOUDRIER V ET AL: "Non-linear light scattering in a two component medium: optical limiting application" XP002096783 * abrégé * & MATERIALS FOR OPTICAL LIMITING II. SYMPOSIUM, MATERIALS FOR OPTICAL LIMITING II. SYMPOSIUM, SAN FRANICSO, CA, USA, 31 MARCH-2 APRIL 1997, pages 279-284, ISBN 1-55899-383-5, 1998, Pittsburgh, PA, USA, Mater. Res. Soc, USA | 1 | **DOMAINES TECHNIQUES RECHERCHES (Int.Cl.6)** G02F H01S |

Le présent rapport a été établi pour toutes les revendications

| Lieu de la recherche | Date d'achèvement de la recherche | Examinateur |
|---|---|---|
| LA HAYE | 29 septembre 1999 | Galanti, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

6

**ANNEXE AU RAPPORT DE RECHERCHE EUROPEENNE
RELATIF A LA DEMANDE DE BREVET EUROPEEN NO.**

EP 99 40 1566

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-1999

| Document brevet cité au rapport de recherche | Date de publication | Membre(s) de la famille de brevet(s) | Date de publication |
|---|---|---|---|
| US 5317454 A | 31-05-1994 | AUCUN | |
| US 4890075 A | 26-12-1989 | AUCUN | |

EPO FORM P0460